# EUROPEAN PATENT SPECIFICATION

(11) **EP 4 330 328 B1**
(45) Date of publication and mention of the grant of the patent: **30.07.2025**
(21) Application number: 21964975.3
(22) Date of filing: 16.12.2021
(51) Int. Cl.: C08L 23/16, C08K 3/01, C08K 3/06, C08K 3/20, B29C 35/02

(54) **EPDM WITH HIGH ELECTRICAL CONDUCTIVITY SUITABLE FOR SEALING EXTRUSION**
EPDM MIT HOHER ELEKTRISCHER LEITFÄHIGKEIT FÜR EXTRUSIONSVERSIEGELUNG
EPDM À HAUTE CONDUCTIVITÉ ÉLECTRIQUE APPROPRIÉ POUR L'EXTRUSION PAR SCELLEMENT

(43) Date of publication of application: 06.03.2024
(73) Proprietor: Standard Profil Ege Otomotiv Sanayi Ve Ticaret A.S, 34406 Kagithane / Istanbul (TR)
(72) Inventor: SAF, Orcun, Foca/Izmir (TR); GUNER, Yusuf, Merkez Duzce (TR); OZDEN, Murat Can, 81620 Duzce (TR)
(74) Representative: Yalvaç, Oya
(86) International application number: PCT/TR2021/051430
(87) International publication number: WO 2023/113707

(56) References cited:
- CN-A- 104 277 337
- CN-A- 104 277 337
- CN-A- 112 659 864
- CN-A- 112 659 864
- CN-A- 112 679 866
- CN-A- 112 679 866

## Description

### Technical Field of the Invention

The invention relates to electrically conductive Ethylene propylene diene monomer (EPDM) sealing strip used in the automotive sector and relates to a preparation method thereof.

### Background of the Invention

Ethylene propylene diene monomer (EPDM) rubbers are one of the most versatile, fastest growing, and interesting synthetic rubber polymers due to excellent properties on resistance to heat, oxidation, ozone and weather aging and are expected to provide continued value in demanding automotive, construction, and mechanical goods applications. Because EPDM is polymer-based material, it is not electrically conductive material due to its atomic structure. The fact that the polymer materials, which are among the main raw materials that make up the automotive sealing elements, are insulators, makes it difficult to use in combination with other components that require electrical conductivity.

Several studies were made previously in order to improve and add different properties to EPDM based rubbers. For example, CN 112679866 is disclosing a low temperature resistant sponge rubber sealing strip which comprises 80-100 parts of low-ethylene EPDM raw rubber, 120-140 parts semi-reinforced carbon black, 0 to 100 parts of paraffin oil, 20 to 30 parts of a white filler, 3.0 to 5.0 parts of activated zinc oxide, 1.5 to 2 parts of stearic acid, 0.6 to 0.8 part of sulfur, 0.5 to 0.8 part of a sulfur-containing accelerant, 3 to 5 parts of an accelerant, 2 to 2.5 parts of a foaming agent and 5 to 8 parts of a moisture absorbent. While the document provides solutions for low elasticity in low-temperature environments or large door closing force required when using a sealing strip of this kind, it does not touch upon the subject of electrical conductivity in EPDM based rubbers.

On a similar note, CN112659864 discloses EPDM raw rubber based lightweight automobile strips. These strips comprise 80-100 parts of EPDM raw rubber, 130-150 parts of carbon black, 60-80 parts of paraffin oil, 40-60 parts of white filler, 3.0-5.0 parts of activated zinc oxide, 1.5-2 parts of stearic acid, 1.5 to 2.0 parts of sulfur and 2.0 to 3.0 parts of accelerant, 1.0-1.5 parts of a physical foaming agent and 1.0-1.5 parts of a chemical foaming agent.

While the document discloses a product with increased resilience that also performs better at low temperatures, it is silent about improved electrical conductivity in EPDM based rubbers.

Another prior art document, CN104277337 addresses the problem of smell and volatile organic compounds (VOC) presence in EPDM based sealing strips. This document discloses an automobile sealing strip comprising 22-27% of ethylene-propylene-diene monomer (EPDM), 34-40% of carbon black, 10-14% of white filler, 1-3% of zinc oxide, 0.1-0.3% of stearic acid, 18-22% of colorless high-viscosity paraffin oil with a high flash point, 1.3-1.8% of a nitrosamine-free vulcanizing accelerator, 0.11-0.15% of sulfur by weight. This document proposes a specific production method for dealing with the smell and residual VOC content however it does not contain any technical teachings that would be useful for obtaining conductive EPDM rubbers.

There are some conductive EPDM rubbers made by adding a large amount of conductive filler. Conductive fillers added to EPDM are usually carbon fiber and carbon nanotube etc., but although these fillers are electrically preferred, the overall performance continues to have a few flaws. For example, carbon nanotube is the best in electrical conductivity, but the most expensive in price, and the addition of carbon fiber seriously affects the mechanical property. Furthermore, due to the addition of a large amount of conductive filler, only some molded products can be made, and the requirements of extrusion molding products cannot be met.

For these reasons, it is necessary to develop and produce EPDM material with high electrical conductivity in many application areas, especially in sealing systems in automotive to be used jointly with electronic components and/or to become an electronic product.

### Summary of Invention

It is an object of the present invention to overcome the above-mentioned deficiencies and provide a conducting EPDM sealing material. Adding conductive filler to EPDM makes it excellent electrically conductive. So, it can be applied to electronic components or devices and the like to meet the high-end application.

Thanks to the EPDM material with high electrical conductivity disclosed in the present invention, it is possible for the products to be used in common with electronic components and/or to become an electronic product in many application areas, especially in sealing systems, which use EPDM material as the basic material. In addition, the characteristics of the invention have been made suitable for extrusion in order to produce the material under suitable conditions.

### Detailed Description of the Invention

In one embodiment, EPDM sealing material conducting electric, comprising:
a) between 15 and 45 wt%, preferably 25 and 35 wt%, more preferably 29 and 32 wt% and most preferably 30.5 and 31.5 wt% of EPDM1 (between 45 and 65 wt% of ethylene content, between 5 and 10 wt% of ENB content), or
   between 5 and 35 wt%, preferably 10 and 30 wt%, more preferably 12 and 25 wt% and most preferably 18.3 and 18.8 wt% of EPDM2 (between 55 and 85 wt% of ethylene content, between 5 and 10 wt% of ENB content) in combination with between 3 and 25 wt%, preferably 5 and 20 wt%, more preferably 8 and 18 wt% and most preferably 12.2 and 12.7 wt% of EPDM3 (between 55 and 75 wt% of ethylene content, between 5 and 10 wt% of ENB content).
b) between 5 and 45 wt%, preferably 15 and 35 wt%, more preferably 20 and 30 wt% and most preferably 22 and 29 wt% of carbon black1 (iodine adsorption number 43g/kg, STSA 39 m²/g, oil absorption number 121 cm³/100g),
c) between 0.25 and 15 wt%, preferably 0.5 and 12 wt%, more preferably 1 and 10 wt% and most preferably 1.5 and 6.3 wt% of carbon black2 (iodine adsorption number >600g/kg, STSA >400 m²/g, oil absorption number >350 cm³/100g),
d) optionally, between 5 and 25 wt%, preferably 10 and 20 wt%, more preferably 13 and 18 wt% and most preferably 15.3 and 15.7 wt% of white filler,
e) between 5 and 35 wt%, preferably 10 and 30 wt%, more preferably 15 and 25 wt% and most preferably 19.8 and 20.5 wt% of process oil,
f) between 0.1 and 10 wt%, preferably 0.5 and 5 wt%, more preferably 1 and 3 wt% and most preferably 1.5 and 1.6 wt% of oxide,
g) between 0.1 and 5 wt%, preferably 0.25 and 3 wt%, more preferably 0.5 and 2 wt% and most preferably 0.6 and 1 wt% of activator,
h) between 0.1 and 5 wt%, preferably 0.2 and 4 wt%, more preferably 0.3 and 3 wt% and most preferably 0.4 and 0.8 wt% of vulcanizing agent, and
i) i)between 0.1 and 10 wt%, preferably 0.5 and 5 wt%, more preferably 0.8 and 3 wt% and most preferably 0.9 and 1.5 wt% of accelerator.

In the formulation, EPDM is used for the material's excellent resistance to ozone and outdoor conditions such as sun, water, and moisture. Carbon black is used due to its reinforcement feature in rubber. Also, carbon black1/carbon black2 ratio is used between 20 and 3 times, preferably between 19 and 3, more preferably 9 and 3. This ratio is maintained for the ability of extrusion production. When exceeding the limits, electrical conductivity and compound processing is getting out of the optimum range.

The EPDM test samples are different in ethylene content and ENB content. EPDM2 and EPDM3 are used for increasing the content of carbon black2. When carbon black1/carbon black2 ratio decrease, the conductivity of the compound increases. In other words, if carbon black2 content increases, conductivity raises dependently. Different EPDM type usage also improves extrusion processing and decreases viscosity of compound.

White Filler is used to increase the dispersion of the compound (easy EPDM breakdown) and to regulate the viscosity of the compound. White filler percentage in the mixture also affects the conductivity. As the content of white filler, chalk, calcite, aragonite, and vaterite can be used. In one embodiment, white filler is chalk.

Activator is process facilitator. For activator stearic acid and polyethylene glycol can be used. Preferably, activator is stearic acid.

Accelerator is used to accelerate the vulcanization. For accelerator MBT and MBTS rubber accelerators are used. Preferably, accelerator is MBT.

Oxide is required to start the vulcanization. Increase in oxide percentage in the mixture also increases the conductivity. The reaction with Activator-oxide is the first chemical reaction that initiates vulcanization. ZnO, CaO, MgO, CdO, CuO, PbO can be used for oxide. Preferably, oxide is ZnO.

Vulcanizing agent is used for the realization of vulcanization. Vulcanizing agents include elemental sulfur, selenium, tellurium, sulfur compounds, peroxides, quinone compounds, amine compounds, resinous compounds, and isocyanates. Preferably, the vulcanizing agent is sulfur.

Process oil is used to increase the process ability of rubber. At the same time, process oil percentage in the mixture affects the conductivity. The rubber process oils are mainly of three types - aromatic, naphthenic, and paraffinic. Preferably, process oil is paraffinic oil in the invention.

In another embodiment, the invention relates to a method of producing the sealing material of the invention, wherein said method comprises;
- Weighing all raw materials on a precision scale,
- Adding a mixture containing a) EPDM1 or a mixture of EPDM2 and EPDM3, b) oxide and c) activator to a mixer and mixing at mixing speed of between 10 and 50 RPM for between 30 and 120 seconds,
- Adding carbon black1, carbon black2, process oil and white filler to the mixture at the mixer and mixing at mixing speed of between 10 and 40 RPM for between 30 and 100 seconds,
- Adding vulcanizing agent and accelerator to the mixture and mixing at mixing speed of between 10 and 35 RPM for between 30 and 80 seconds.

The examples of the invention are listed in the table below:

| Materials | IL-1 | IL-2 | IL-3 | IL-4 | IL-5 |
|---|---|---|---|---|---|
| EPDM1 (wt%) | 30.5 | 30.5 | 30.5 | 31.5 | - |
| EPDM2 (wt%) | - | - | - | - | 18.4 |
| EPDM3 (wt%) | - | - | - | - | 12.3 |
| Carbon Black1 (wt%) | 29.0 | 27.5 | 25.9 | 22.0 | 23.0 |
| Carbon Black2 (wt%) | 1.5 | 3 | 4.6 | 6.3 | 7.7 |
| Chalk (wt%) | 15.3 | 15.3 | 15.3 | 15.7 | 15.3 |
| Paraffinic Proses Oil (wt%) | 19.8 | 19.8 | 19.8 | 20.5 | 19.9 |
| Active ZnO (wt%) | 1.5 | 1.5 | 1.5 | 1.6 | 1.5 |
| Stearic acid (wt%) | 0.8 | 0.8 | 0.8 | 0.8 | 0.3 |
| Sulfur (wt%) | 0.5 | 0.5 | 0.5 | 0.5 | 0.5 |
| MBT (wt%) | 1.1 | 1.1 | 1.1 | 1.1 | 1.1 |

The table contains five different mixtures, each with different levels of conductivity performance. The electrical conductivity values of each are tested in test devices conforming to the ISO 1853 standard:

| **Volume Resistivity** | **IL-1** | **IL-2** | **IL-3** | **IL-4** | **IL-5** |
|---|---|---|---|---|---|
| ohm.cm | 4.7E+04 | 2.7E+04 | 1.4E+04 | 8.8E+03 | 5.4E+03 |

### Example 1

EPDM sealing material conducting electric, comprising: 30.5 wt% of EPDM1, 29 wt% of carbon black1, 1.5 wt% of carbon black2, 15.3 wt% of chalk, 19.8 wt% of Paraffinic process oil, 1.5 wt% of Zinc oxide, 0.8 wt% of stearic acid, 0.5 wt% of sulfur and 1.1 wt% of MBT.

### Preparation 1

Process includes:
- weighing all raw materials on a precision scale,
- a mixture containing 30.5 wt% of EPDM1, 1.5 wt% of active ZnO, and 0.8 wt% stearic acid is added to a mixer and mixed at mixing speed between 10-50 RPM for 30-120 seconds,
- 29 wt% of carbon black1, 1.5 wt% of carbon black2, 19.8 wt% of Paraffinic process oil and 15.3 wt% of chalk are added to the mixture at the mixer and mixed at mixing speed between 10-40 RPM for 30-100 seconds,
- 1.6 wt% of sulfur + MBT are added to the mixture and mixed at mixing speed between 10-35 RPM for 30-80 seconds.

### Example 2

EPDM sealing material conducting electric, comprising: 30.5 wt% of EPDM1, 27.5 wt% of carbon black1, 3 wt% of carbon black2, 15.3 wt% of chalk, 19.8 wt% of Paraffinic process oil, 1.5 wt% of Zinc oxide, 0.8 wt% of stearic acid, 0.5 wt% of sulfur and 1.1 wt% of MBT.

### Preparation 2

Process includes:
- weighing all raw materials on a precision scale,
- a mixture containing 30.5 wt% of EPDM1, 1.5 wt% of active ZnO, and 0.8 wt% stearic acid is added to a mixer and mixed at mixing speed between 10-50 RPM for 30-120 seconds,
- 27.5 wt% of carbon black1, 3 wt% of carbon black2, 19.8 wt% of Paraffinic process oil and 15.3 wt% of chalk are added to the mixture at the mixer and mixed at mixing speed between 10-40 RPM for 30-100 seconds,
- 1.6 wt% of sulfur + MBT are added to the mixture and mixed at mixing speed between10-35 RPM for 30-80 seconds.

### Example 3

EPDM sealing material conducting electric, comprising: 30.5 wt% of EPDM1, 25.9 wt% of carbon black1, 4.6 wt% of carbon black2, 15.3 wt% of chalk, 19.8 wt% of Paraffinic process oil, 1.5 wt% of Zinc oxide, 0.8 wt% of stearic acid, 0.5 wt% of sulfur and 1.1 wt% of MBT.

### Preparation 3

Process includes:
- weighing all raw materials on a precision scale,
- a mixture containing 30.5 wt% of EPDM1, 1.5 wt% of active ZnO, and 0.8 wt% stearic acid is added to a mixer and mixed at mixing speed between 10-50 RPM for 30-120 seconds,
- 25.9 wt% of carbon black1, 4.6 wt% of carbon black2, 19.8 wt% of Paraffinic process oil and 15.3 wt% of chalk are added to the mixture at the mixer and mixed at mixing speed between 10-40 RPM for 30-100 seconds,
- 1.6 wt% of sulfur + MBT are added to the mixture and mixed at mixing speed between 10-35 RPM for 30-80 seconds.

### Example 4

EPDM sealing material conducting electric, comprising: 31.5 wt% of EPDM1, 22 wt% of carbon black1, 6.3 wt% of carbon black2, 15.7 wt% of chalk, 20.5 wt% of Paraffinic process oil, 1.6 wt% of Zinc oxide, 0.8 wt% of stearic acid, 0.5 wt% of sulfur and 1.1 wt% of MBT.

### Preparation 4

Process includes:
- weighing all raw materials on a precision scale,
- a mixture containing 31.5 wt% of EPDM1, 1.6 wt% of active ZnO, and 0.8 wt% stearic acid is added to a mixer and mixed at mixing speed between 10-50 RPM for 30-120 seconds,
- 22 wt% of carbon black1, 6.3 wt% of carbon black2, 20.5 wt% of Paraffinic process oil and 15.7 wt% of chalk are added to the mixture at the mixer and mixed at mixing speed between 10-40 RPM for 30-100 seconds,
- 1.6 wt% of sulfur + MBT are added to the mixture and mixed at mixing speed between 10-35 RPM for 30-80 seconds.

### Example 5

EPDM sealing material conducting electric, comprising: 18.4 wt% of EPDM2 and 12.3 wt% of EPDM3, 23 wt% of carbon black1, 7.7 wt% of carbon black2, 15.3 wt% of chalk, 19.9 wt% of Paraffinic process oil, 1.5 wt% of Zinc oxide, 0.3 wt% of stearic acid, 0.5 wt% of sulfur and 1.1 wt% of MBT.

### Preparation 5

Process includes:
- weighing all raw materials on a precision scale,
- a mixture containing 18.4 wt% of EPDM2, 12.3 wt% of EPDM3, 1.5 wt% of active ZnO, and 0.3 wt% of stearic acid is added to a mixer and mixed at mixing speed between 10-50 RPM for 30-120 seconds,
- 23 wt% of carbon black1, 7.7 wt% of carbon black2, 19.9 wt% of Paraffinic process oil and 15.3 wt% of chalk are added to the mixture at the mixer and mixed at mixing speed between 10-40 RPM for 30-100 seconds,
- 1.6 wt% of sulfur + MBT are added to the mixture and mixed at mixing speed between 10-35 RPM for 30-80 seconds.

Method of producing the sealing strip comprising molding EPDM sealing material with one of extrusion molding, injection molding, transfer molding and compression molding.

In extrusion molding, the material performs vulcanization in the pressure-free environment in the extrusion line passing through the mold.

In injection molding, the material passes through the screw and is filled into the mold with high pressure. Shaping is completed in the mold. Curing is expected to be completed for a certain period.

Unlike injection, transfer molding, without screws, the desired amount is transferred to the mold with the help of a piston. Curing is expected to be completed for a certain period.

Compression molding is molded under pressure without applying a flow process, by placing enough sealing material into the mold.

The produced sealing strip can be used a seal for an automobile part or an appliance part.

## Claims

1. Ethylene propylene diene monomer (EPDM) sealing material comprising:
a) - between 15 and 45 wt% of EPDM1, wherein the ethylene content of EPDM1 is between 45 and 65 wt% and ENB content of EPDM1 is between 5 and 10 wt%, or
- between 5 and 35 wt% of EPDM2 wherein the ethylene content of EPDM2 is between 55 and 85 wt% and ENB content of EPDM2 is between 5 and 10 wt%, in combination with between 3 and 25 wt% of EPDM3 wherein the ethylene content of EPDM3 is between 55 and 75 wt% and ENB content of EPDM3 is between 5 and 10 wt%,
b) between 5 and 35 wt% of process oil,
c) between 0.1 and 10 wt% of oxide,
d) between 0.1 and 5 wt% of activator,
e) between 0.1 and 5 wt% of vulcanizing agent,
f) between 0.1 and 10 wt% of accelerator,
**characterized in that** the material further comprises:
g) between 5 and 45wt% of carbon black1 (iodine adsorption number 43g/kg, STSA 39 m²/g, oil absorption number 121 cm³/100g),
h) between 0.25 and 15 wt% of carbon black2 (iodine adsorption number >600g/kg, STSA >400 m²/g, oil absorption number >350 cm³/100g),
wherein carbon black1/carbon black2 ratio is between 20 and 3 times.

2. EPDM sealing material according to claim 1 , wherein process oil is paraffinic oil.

3. EPDM sealing material according to claim 1 or 2, wherein oxide is ZnO.

4. EPDM sealing material according to any one of the preceding claims, wherein vulcanizing agent is sulfur.

5. EPDM sealing material according to any one of the preceding claims, wherein activator is stearic acid.

6. EPDM sealing material according to any one of the preceding claims, wherein accelerator is MBT.

7. EPDM sealing material according to any one of the preceding claims, further comprising between 5 and 25 wt% of white filler.

8. EPDM sealing material according to claim 7, wherein white filler is chalk.

9. Method of producing the sealing material according to any one of claims 1 to 8 comprises:
- weighing all raw materials on a precision scale,
- adding a mixture containing a) EPDM1 or a mixture of EPDM2 and EPDM3, b) oxide, and c) activator to a mixer and mixing at mixing speed of between 10 and 50 RPM for between 30 and 120 seconds,
- adding carbon black1, carbon black2, process oil and white filler to the mixture at the mixer and mixing at mixing speed of between 10 and 40 RPM for between 30 and 100 seconds,
- adding vulcanizing agent and accelerator to the mixture and mixing at mixing speed of between 10 and 35 RPM for between 30 and 80 seconds.

10. A sealing strip comprised of EPDM sealing material according to any one of claims 1 to 8.

11. Method of producing the sealing strip according to claim 10, comprising molding EPDM sealing material with one of extrusion molding, injection molding, transfer molding and compression molding.

12. The sealing strip according to claim 10, formed as a seal for an automobile part or an appliance part.

## Patentansprüche

1. Ethylen-Propylen-Dien-Monomer (EPDM)-Versiegelungsmaterial, umfassend:
a) - zwischen 15 und 45 Gew.-% EPDM1, wobei der Ethylengehalt von EPDM1 zwischen 45 und 65 Gew.-% und der ENB-Gehalt von EPDM1 zwischen 5 und 10 Gew.-% liegt, oder
- zwischen 5 und 35 Gew.-% EPDM2, wobei der Ethylengehalt von EPDM2 zwischen 55 und 85 Gew.-% und der ENB-Gehalt von EPDM2 zwischen 5 und 10 Gew.-% liegt, in Kombination mit zwischen 3 und 25 Gew.-% EPDM3, wobei der Ethylengehalt von EPDM3 zwischen 55 und 75 Gew.-% und der ENB-Gehalt von EPDM3 zwischen 5 und 10 Gew.-% liegt,
b) zwischen 5 und 35 Gew.-% Prozessöl,
c) zwischen 0,1 und 10 Gew.-% Oxid,
d) zwischen 0,1 und 5 Gew.-% Aktivator,
e) zwischen 0,1 und 5 Gew.-% Vulkanisationsmittel,
f) zwischen 0,1 und 10 Gew.-% Beschleuniger,
**dadurch gekennzeichnet, dass** das Material weiter umfasst:
g) zwischen 5 und 45 Gew.-% Ruβ1 (Iodadsorptionszahl 43 g/kg, STSA 39 m²/g, Ölabsorptionszahl 121 cm³/100 g),
h) zwischen 0,25 und 15 Gew.-% Ruß2 (Iodadsorptionszahl >600 g/kg, STSA >400 m²/g, Ölabsorptionszahl >350 cm³/100 g),
wobei das Verhältnis von Ruβ1 zu Ruß2 zwischen 20 und 3 liegt.

2. EPDM-Versiegelungsmaterial nach Anspruch 1, wobei das Prozessöl ein paraffinisches Öl ist.

3. EPDM-Versiegelungsmaterial nach Anspruch 1 oder 2, wobei das Oxid ZnO ist.

4. EPDM-Versiegelungsmaterial nach einem der vorstehenden Ansprüche, wobei das Vulkanisationsmittel Schwefel ist.

5. EPDM-Versiegelungsmaterial nach irgendeinem der vorstehenden Ansprüche, wobei der Aktivator Stearinsäure ist.

6. EPDM-Versiegelungsmaterial nach irgendeinem der vorstehenden Ansprüche, wobei der Beschleuniger MBT ist.

7. EPDM-Versiegelungsmaterial nach irgendeinem der vorstehenden Ansprüche, das weiter zwischen 5 und 25 Gew.-% weißen Füllstoff umfasst.

8. EPDM-Versiegelungsmaterial nach Anspruch 7, wobei der weiße Füllstoff Kreide ist.

9. Verfahren zur Herstellung des Versiegelungsmaterials nach irgendeinem der Ansprüche 1 bis 8, umfassend:
- Wiegen aller Rohstoffe auf einer Präzisionswaage,
- Hinzufügen einer Mischung, die a) EPDM1 oder eine Mischung aus EPDM2 und EPDM3, b) Oxid und c) Aktivator enthält, zu einem Mischer und Mischen bei einer Mischgeschwindigkeit zwischen 10 und 50 U/min für 30 bis 120 Sekunden,
- Hinzufügen von Ruß1, Ruß2, Prozessöl und weißem Füllstoff zu der Mischung im Mischer und Mischen bei einer Mischgeschwindigkeit zwischen 10 und 40 U/min für 30 bis 100 Sekunden,
- Hinzufügen von Vulkanisationsmittel und Beschleuniger zu der Mischung und Mischen bei einer Mischgeschwindigkeit zwischen 10 und 35 U/min für 30 bis 80 Sekunden.

10. Dichtungsstreifen, umfassend EPDM-Versiegelungsmaterial nach irgendeinem der Ansprüche 1 bis 8.

11. Verfahren zum Herstellen des Dichtungsstreifens nach Anspruch 10, umfassend das Formen des EPDM-Versiegelungsmaterials durch Extrusionsformen, Spritzgießen, Transferformen oder Formpressen.

12. Dichtungsstreifen nach Anspruch 10, der als Dichtung für ein Automobilteil oder ein Geräteteil ausgebildet ist.

## Revendications

1. Matériau d'étanchéité à base de monomère d'éthylène-propylène-diène (EPDM) comprenant :
a) - entre 15 et 45 % en poids d'EPDM1, dans lequel la teneur en éthylène de l'EPDM1 est comprise entre 45 et 65 % en poids et la teneur en ENB de l'EPDM1 est comprise entre 5 et 10 %, ou
- entre 5 et 35 % en poids d'EPDM2 dans lequel la teneur en éthylène de l'EPDM2 est comprise entre 55 et 85 % en poids et la teneur en ENB de l'EPDM2 est comprise entre 5 et 10 % en poids, en combinaison avec entre 3 et 25 % en poids d'EPDM3 dans lequel la teneur en éthylène de l'EPDM3 est comprise entre 55 et 75 % en poids et la teneur en ENB de l'EPDM3 est comprise entre 5 et 10 % en poids,
b) entre 5 et 35 % en poids d'huile de procédé,
c) entre 0.1 et 10 % en poids d'oxyde,
d) entre 0.1 et 5 % en poids d'activateur,
e) entre 0.1 et 5 % en poids d'agent vulcanisant,
f) entre 0.,1 et 10 % en poids d'accélérateur,
**caractérisé en ce que** le matériau comprend en outre :
g) entre 5 et 45 % en poids de noir de carbone 1 (indice d'adsorption d'iode
43 g/kg, STSA 39 m²/g, indice d'absorption d'huile 121 cm³/100g),
h) entre 0.25 et 15 % en poids de noir de carbone 2 (indice d'adsorption d'iode >600 g/kg, STSA >400 m²/g, indice d'absorption d'huile >350 cm³/100 g),
dans lequel le rapport noir de carbone 1/noir de carbone 2 est compris entre 20 et 3 fois.

2. Matériau d'étanchéité d'EPDM selon la revendication 1, dans lequel l'huile de procédé est l'huile de paraffine.

3. Matériau d'étanchéité d'EPDM selon la revendication 1 ou 2, dans lequel l'oxyde est ZnO.

4. Matériau d'étanchéité d'EPDM selon l'une quelconque des revendications précédentes, dans lequel l'agent vulcanisant est le soufre.

5. Matériau d'étanchéité d'EPDM selon l'une quelconque des revendications précédentes, dans lequel l'activateur est l'acide stéarique.

6. Matériau d'étanchéité d'EPDM selon l'une quelconque des revendications précédentes, dans lequel l'accélérateur est le MBT.

7. Matériau d'étanchéité d'EPDM selon l'une quelconque des revendications précédentes, comprenant en outre entre 5 et 25 % en poids de charge blanche.

8. Matériau d'étanchéité d'EPDM selon la revendication 7, dans lequel la charge blanche est la craie.

9. Procédé de fabrication du matériau d'étanchéité selon l'une quelconque des revendications 1 à 8 comprenant les étapes suivantes:
- peser toutes les matières premières sur une balance de précision,
- ajouter un mélange contenant a) de l'EPDM1 ou un mélange d'EPDM2 et d'EPDM3, b) de l'oxyde, et c) un activateur dans un mélangeur et le mélanger à une vitesse de mélange comprise entre 10 et 50 tr/min pendant 30 à 120 secondes,
- ajouter du noir de carbone 1, du noir de carbone 2, de l'huile de procédé et une charge blanche au mélange dans le mélangeur et mélanger à une vitesse de mélange comprise entre 10 et 40 tr/min pendant 30 à 100 secondes,
- ajouter un agent vulcanisant et un accélérateur au mélange et mélanger à une vitesse de mélange comprise entre 10 et 35 tr/min pendant 30 à 80 secondes.

10. Bande d'étanchéité composée de matériau d'étanchéité EPDM selon l'une quelconque des revendications 1 à 8.

11. Procédé de fabrication de la bande d'étanchéité selon la revendication 10, comprenant le moulage d'un matériau d'étanchéité EPDM par l'un des moulages par extrusion, par injection, par transfert ou par compression.

12. Bande d'étanchéité selon la revendication 10, formée comme joint pour une pièce automobile ou une pièce d'appareil.
